# EUROPÄISCHE PATENTSCHRIFT

(11) **EP 1 522 113 B1**
(45) Veröffentlichungstag und Bekanntmachung des Hinweises auf die Patenterteilung: **29.08.2012**
(21) Anmeldenummer: 03763796.4
(22) Anmeldetag: 10.07.2003
(51) Int. Cl.: H01M 8/04, H01M 8/10

(54) **ELEKTRODEN-MEMBRAN-EINHEIT-PRÜFVORRICHTUNG UND VERFAHREN ZUR PRÜFUNG EINER ELEKTRODEN-MEMBRAN-EINHEIT**
ELECTRODE-MEMBRANE ASSEMBLY TESTING APPARATUS AND METHOD FOR TESTING AN ELECTRODE-MEMBRANE ASSEMBLY
APPAREIL DE TEST D'UN ENSEMBLE MEMBRANE ELECTRODE ET PROCEDE POUR TESTER UN ENSEMBLE MEMBRANE ELECTRODE

(30) Priorität: 11.07.2002 DE 10232130
(43) Veröffentlichungstag der Anmeldung: 13.04.2005
(73) Patentinhaber: Deutsches Zentrum für Luft- und Raumfahrt e.V., 51147 Köln (DE)
(72) Erfinder: KAZ, Till, 70186 Stuttgart (DE); WAGNER, Norbert, 71065 Sindelfingen (DE)
(74) Vertreter: Regelmann, Thomas
(86) Internationale Anmeldenummer: PCT/EP2003/007492
(87) Internationale Veröffentlichungsnummer: WO 2004/008566

(56) Entgegenhaltungen:
- WO-A-00/28286
- WO-A-99/48422
- DE-A- 3 537 129
- DE-C- 19 801 117
- US-B1- 6 295 512
- US-B1- 6 331 778
- FIRLEJ L ET AL: "Field-induced diffusion of gold and related phase transformations in the C60 and C70 fullerenes", PHYSICAL REVIEW, B. CONDENSED MATTER, AMERICAN INSTITUTE OF PHYSICS. NEW YORK, US, vol. 59, no. 24, 15 June 1999 (1999-06-15) , pages 16028-16032, XP008132560, ISSN: 0163-1829, DOI: 10.1103/PHYSREVB.59.16028

## Beschreibung

Die Erfindung betrifft eine Elektroden-Membran-Einheit-Prüfvorrichtung und ein Verfahren zur Prüfung einer Elektroden-Membran-Einheit.

Ein grundsätzliches Problem bei Elektroden-Membran-Einheiten beispielsweise für Polymerelektrolyt-Membran-Brennstoffzellen ist die Endkontrolle, da die Membran beschädigt sein kann, wobei durch die beidseitigen Elektrodenschichten diese Beschädigung mittels einer Sichtkontrolle nicht detektierbar ist.

In einem Brennstoffzellenstapel werden eine Vielzahl von Elektroden-Membran-Einheiten eingesetzt, beispielsweise in der Größenordnung von 100; eine fehlerhafte Elektroden-Membran-Einheit kann zum Ausfall des ganzen Stapels führen.

Deshalb ist es wichtig, eine hergestellte Elektroden-Membran-Einheit auf ihre Funktionsfähigkeit zu prüfen. Es ist bekannt, stichprobenhaft Elektroden-Membran-Einheiten aus der Produktion herauszunehmen und elektrochemisch zu charakterisieren. Danach kann diese Stichprobe nicht mehr weiterverwendet werden.

Aus der DE 198 01 117 C1 ist ein Verfahren zur Prüfung der Qualität eines eine Membran umfassenden flächigen Elements bekannt, bei dem die Qualitätsprüfung auf eine Teilfläche des flächigen Elements begrenzt wird, dem ein für den Einsatz des flächigen Elements vorgesehener Einsatzstoff über eine Einsatzstoffaustrittsöffnung eines Gehäuses einer Seite des flächigen Elements zugeführt wird, wobei die durch die Einsatzstoffaustrittsöffnung umrahmte Fläche der zu prüfenden Teilfläche entspricht. Es können dabei ein Anodenkontaktelement und ein Kathodenkontaktelement zur elektrischen Kontaktierung von Elektrodenelementen vorgesehen sein sowie Mittel zur Bestimmung einer zwischen den Elektrodenelementen der beiden Seiten anliegenden Spannung und/oder eines zwischen den Elektrodenelementen fließenden Stroms.

Aus der WO 00/28286 A1 ist eine Sensoranordnung zur Montage innerhalb eines Gefäßes bekannt.

Der Artikel FIRLEJ L ET AL.: "Field induced diffusion of gold and related phase transformations in the C60 and C70 fullerenes", PHYSICAL REVIEW B, Bd. 59, Nr. 24, 15. Juni 1999 (1999-07-15), Seiten 16028-16032, XP008132560 beschreibt eine Vorrichtung für Widerstandsmessungen an dünnen Filmen.

Der Erfindung liegt daher die Aufgabe zugrunde, eine Elektroden-Membran-Einheit-Prüfvorrichtung und ein Verfahren zur Prüfung einer Elektroden-Membran-Einheit zu schaffen, mittels welcher bzw. welchem sich hergestellte Elektroden-Membran-Einheiten zerstörungsfrei prüfen lassen.

Diese Aufgabe wird erfindungsgemäß dadurch gelöst, dass eine Elektroden-Membran-Einheit-Prüfvorrichtung zur Prüfung einer Elektroden-Membran-Einheit eine erste Kontakteinrichtung umfasst, um eine erste Elektrodenseite des Messgegenstands in elektrischen Kontakt zu bringen, eine zweite Kontakteinrichtung umfasst, um eine zweite Elektrodenseite des Messgegenstands, welche der ersten Elektrodenseite gegenüberliegt, in elektrischen Kontakt zu bringen, wobei erste und zweite Kontakteinrichtung mindestens im Kontaktbereich elektrisch leitend ausgebildet sind und die erste Kontakteinrichtung und/oder die zweite Kontakteinrichtung eine Mehrzahl von elektrisch leitenden beabstandeten Kontaktsegmenten aufweist, und eine Leitfähigkeits-Messvorrichtung umfasst, mittels der die Leitfähigkeit des Messgegenstands segmentweise ortsaufgelöst messbar ist, wobei der Messgegenstand und die Kontakteinrichtungen relativ zueinander linear verschieblich sind.

Erfindungsgemäß wird mit der ersten Kontakteinrichtung ein Kontakt zwischen der ersten Seite und insbesondere Elektrodenseite des Messgegenstands hergestellt und entsprechend mit der zweiten Kontakteinrichtung Kontakt mit der zweiten Seite des Messgegenstands und insbesondere mit der zweiten Elektrodenseite des Messgegenstands. Es lässt sich dann eine Leitfähigkeitsmessung zwischen den beiden Elektrodenseiten durchführen, wobei diese über die segmentweise Ausbildung mindestens einer der beiden Kontakteinrichtungen ortsaufgelöst ist, nämlich bestimmt durch die Anordnung und Ausbildung der einzelnen Kontaktsegmente. Eine Leitfähigkeitsmessung ist zerstörungsfrei durchführbar, so dass sich die erfindungsgemäße Vorrichtung auf einfache Weise in den Herstellungsprozess einer Elektroden-Membran-Einheit integrieren lässt.

Über eine impedanzspektroskopische Untersuchung, nämlich Messung des Wechselstromwiderstands, lässt sich die Leitfähigkeit der Elektroden-Membran-Einheit aufgrund der segmentweisen Ausbildung mindestens einer der beiden Kontakteinrichtungen ortsaufgelöst ermitteln. Die Leitfähigkeit gibt Aufschluss über eine mögliche Beschädigung der Membran, wie beispielsweise eine Leckstelle, welche zu einer starken Absenkung der Leitfähigkeit im Bereich der Leckstelle führt. Auch Dickenunterschiede in der Membran, d. h. lokale Abweichungen von einer mittleren Dicke, können über die erfindungsgemäße Leitfähigkeitsmessung detektiert werden. Solche Dickenunterschiede sind unerwünscht, da sie zu einer unterschiedlichen lokalen Protonenleitung führen.

Es ist aber auch möglich, den Gleichstromwiderstand oder die Impedanz zwischen Kontaktsegmenten und insbesondere benachbarten Kontaktsegmenten innerhalb einer Kontakteinrichtung, d. h. innerhalb der ersten Kontakteinrichtung oder der zweiten Kontakteinrichtung zu messen. Dadurch lässt sich eine Messung der Querleitfähigkeit an einer Elektrodenschicht durchführen, ohne den Einfluss der Membran mitzumessen. Damit wiederum lässt sich die Elektrodenschicht prüfen, und insbesondere lässt sich dadurch die Dicke der Elektrodenschicht bestimmen.

Der Messgegenstand und die Kontakteinrichtung sind relativ zueinander linear verschieblich, um so auf einfache Weise eine Abtastung des Messgegenstands zu ermöglichen. Grundsätzlich ist es möglich, den Meßgegenstand ortsfest zu halten und die Kontakteinrichtungen relativ zu dem Meßgegenstand zu verschieben. Ganz besonders vorteilhaft ist es jedoch, wenn die Kontakteinrichtungen bezüglich Translationsverschiebungen ortsfest gehalten werden und der Meßgegenstand relativ zu den Kontakteinrichtungen transportiert wird.

Insbesondere ist es dann vorgesehen, daß der Meßgegenstand zwischen der ersten und der zweiten Kontakteinrichtung durchführbar ist, so daß bei dem Transport des Meßgegenstands, um diesen möglichst vollständig abzutasten, der elektrische Kontakt zu der ersten Meßeinrichtung und der zweiten Meßeinrichtung erhalten bleibt.

Fertigungstechnisch günstig ist es, wenn die erste und/oder zweite Kontakteinrichtung als Transporteinrichtung zum Transport des Meßgegenstands relativ zu der oder den Kontakteinrichtungen ausgebildet sind. Da die Kontakteinrichtungen in elektrischen Kontakt mit dem Meßgegenstand stehen müssen, kann der dazu notwendige mechanische Kontakt auch dazu genutzt werden, um über insbesondere Rotationsbewegung einer oder beider Kontakteinrichtungen einen linearen Transport des Meßgegenstands zu bewirken.

Vorteilhafterweise sind dabei die erste und zweite Kontakteinrichtung so ausgebildet, daß bei der Transportbewegung des Meßgegenstands der elektrische Kontakt erhalten bleibt.

Dies läßt sich auf einfache Weise erreichen, wenn die erste Kontakteinrichtung eine Walze umfaßt. Ferner ist es günstig, wenn die zweite Kontakteinrichtung eine Walze umfaßt. Über diese Walzen, die insbesondere als Transportwalzen ausgebildet sind, läßt sich dann der Meßgegenstand transportieren, wobei automatisch für einen elektrischen Kontakt gesorgt ist.

Um eine ortsaufgelöste Messung durchführen zu können, sind zwischen benachbarten Kontaktsegmenten der ersten und/oder zweiten Kontakteinrichtung, welche in elektrischen Kontakt mit dem Meßgegenstand bringbar sind, Bereiche angeordnet, welche nicht in elektrischen Kontakt mit dem Meßgegenstand stehen, wenn elektrischer Kontakt mit den Kontaktsegmenten hergestellt ist. Dies läßt sich beispielsweise dadurch erreichen, daß die entsprechenden Bereiche zurückgesetzt sind, so daß sie nicht in mechanischen Kontakt mit dem Meßgegenstand kommen. Es kann aber auch vorgesehen sein, daß diese Bereiche mittels eines Isoliermaterials hergestellt sind. Im letzteren Fall erhält man eine größere mechanische Kontaktoberfläche für den mechanischen Kontakt zwischen der entsprechenden Kontakteinrichtung und dem Meßgegenstand. Dies ist vorteilhaft für den Transport des Meßgegenstands. Die Ortsauflösung der Messung ist dann durch die Anordnung und Dimensionierung der Kontaktsegmente bestimmt.

Insbesondere ist es vorgesehen, daß die Kontaktsegmente der ersten und/oder zweiten Kontakteinrichtung parallel beabstandet sind. Diese messen dann die gleiche Leitfähigkeitskomponente.

Weiterhin ist es günstig, wenn die Kontaktsegmente der ersten und/oder zweiten Kontakteinrichtung gleichmäßig beabstandet sind, so daß eine gleichmäßige Ortsmessung durchführbar ist.

Weiterhin ist es günstig, wenn die Kontaktsegmente parallel oder in einem kleinen Winkel zu einer Transportrichtung ausgerichtet sind. Dadurch läßt sich ein Strompfad für den Stromfluß zwischen der ersten Kontakteinrichtung und der zweiten Kontakteinrichtung einstellen, wobei der Strom über das zugeordnete Kontaktsegment aufgenommen wird, welcher im wesentlichen parallel zur Transportrichtung ist. Die Abtastung des Meßgegenstands läßt sich in parallelen Spuren durchführen.

Ganz besonders vorteilhaft ist es, wenn über die Leitfähigkeitsmeßvorrichtung segmentweise die Impedanz zwischen der ersten Kontakteinrichtung und der zweiten Kontakteinrichtung ermittelbar ist. Jedem Kontaktsegment kann dann zeitlich aufgelöst eine Impedanz zugeordnet werden und bei Abweichungen in einem bestimmten Kontaktsegment kann dann der gerade untersuchte Bereich als fehlerhaft detektiert werden.

Die Impedanz erhält man über Vorgabe/Messung einer Wechselspannung/ eines Wechselstroms bzw. umgekehrt. Beispielsweise wird eine Wechselspannung einer bestimmten Frequenz zwischen der ersten Kontakteinrichtung und der zweiten Kontakteinrichtung vorgegeben und dann der Wechselstrom zwischen den beiden Kontakteinrichtungen segmentweise ermittelt oder es wird ein Wechselstrom vorgegeben und die Wechselspannung segmentweise zwischen den beiden Kontakteinrichtungen ermittelt. Auf diese Weise erhält man ortsaufgelöste Leitfähigkeitsinformationen für die Elektroden-Membran-Einheit.

Weiterhin ist es vorteilhaft, wenn über die Leitfähigkeits-Meßvorrichtung der Gleichstromwiderstand oder die Impedanz zwischen Kontaktsegmenten einer Kontakteinrichtung meßbar ist, d. h. zwischen Kontaktsegmenten und insbesondere benachbarten Kontaktsegmenten der gleichen Kontakteinrichtung meßbar ist. Dadurch läßt sich die Leitfähigkeit einer Elektrodenschicht bestimmen, da eben der Strom dann innerhalb einer Elektrodenschicht fließt. Auf diese Weise wiederum kann dann die Querleitfähigkeit innerhalb einer solchen Elektrodenschicht bestimmt werden und damit beispielsweise die Dicke dieser Elektrodenschicht ermittelt werden.

Es kann vorgesehen sein, daß der Abstand zwischen Achsen von Walzen der ersten Kontakteinrichtung und der zweiten Kontakteinrichtung einstellbar ist. Die Einstellbarkeit kann dabei grundsätzlich in zwei verschiedenen Richtungen erfolgen, nämlich in Transportrichtung und quer dazu. In der Querrichtung ermöglicht die Einstellbarkeit, auch Elektroden-Membran-Einheiten unterschiedlicher Dicken durchtransportieren zu können. Über die Einstellbarkeit in der Transportrichtung läßt sich über Einstellung einer Spurlänge der Strompfad längs der Transportrichtung einstellen, d. h. der Abstand in Transportrichtung der Kontaktbereiche, in welchen die zweite Kontakteinrichtung und die erste Kontakteinrichtung den Meßgegenstand elektrisch kontaktieren. Dies bestimmt die Ortsauflösung in der Transportrichtung. Ist beispielsweise dieser Abstand groß, dann kann in kurzer Zeit in der Transportrichtung ein langer Weg geprüft werden, was entsprechend zeitsparend ist. Jedoch kann sich bei einem solchen langen Weg die Meßgenauigkeit reduzieren. Deshalb kann es günstig sein, insbesondere wenn der Meßgegenstand hochgenau überprüft werden soll, daß der Abstand zwischen den beiden Kontakteinrichtungen in der Transportrichtung verkleinert wird und im Idealfalle kein solcher Abstand vorliegt, d. h. die Achsen der beiden Walzen bezogen auf die Transportrichtung gegenüberliegen.

Um gleichzeitig einen elektrischen Kontakt herzustellen und einen Transport des Meßgegenstands durchführen zu können, ist es vorteilhaft, wenn die erste und/oder zweite Kontakteinrichtung mit der Leitfähigkeitsmeßvorrichtung über Schleifenkontakte verbunden sind. Dadurch wird für eine Signalabgreifbarkeit von der ersten und/oder zweiten Kontakteinrichtung gesorgt, unabhängig von deren Drehstellung.

Bei einer Variante einer Ausführungsform weist die zweite Kontakteinrichtung eine bezüglich ihrer elektrischen Eigenschaften glatte Oberfläche auf, d. h. ist nicht segmentweise ausgebildet. Es läßt sich dann zwischen der zweiten Kontakteinrichtung und den beabstandeten Kontaktsegmenten der ersten Kontakteinrichtung eine Impedanzmessung durchführen, wobei die Ortsauflösung durch die Kontaktsegmente bestimmt ist.

Es kann auch vorgesehen sein, daß erste und zweite Kontakteinrichtung mit Kontaktsegmenten versehen sind. Dadurch kann eine Impedanzmessung zwischen bestimmten Kontaktsegmenten der beiden Kontakteinrichtungen durchgeführt werden.

Insbesondere ist es dabei vorgesehen, daß die Impedanz zwischen quer zur Transportrichtung beabstandeten Kontaktsegmenten der ersten und zweiten Kontakteinrichtung meßbar ist. Wenn die zweite Kontakteinrichtung eine bezüglich ihrer elektrischen Leitfähigkeit glatte Oberfläche aufweist, dann wird bei der Impedanzmessung zwischen Kontaktsegmenten der ersten Kontakteinrichtung und der zweiten Kontakteinrichtung im wesentlichen die Leitfähigkeit quer zur Membranoberfläche ermittelt (senkrechte Leitfähigkeit), und zwar insbesondere dann, wenn die beiden Kontakteinrichtungen gegenüberstehen.

Werden jedoch Impedanzmessungen zwischen quer zur Transporteinrichtung beabstandeten Kontaktsegmenten der beiden Kontakteinrichtungen durchgeführt, dann lässt sich auch eine Querleitfähigkeit ermitteln, d. h. eine Leitfähigkeit mit einer Komponente parallel zur Membranoberfläche. Dadurch lässt sich die Ortsauflösung erhöhen, da zusätzlich zu der durch die Segmente vorgegebenen spurartigen Messung auch Leitfähigkeitsabweichungen quer zu diesen Spuren erfassbar sind.

Es kann auch vorgesehen sein, dass mittels der Leitfähigkeitsmessvorrichtung eine Umschaltmessung durchführbar ist, bei der zwischen erster Kontakteinrichtung und zweiter Kontakteinrichtung ein Aufladungsvorgang und ein Entladungsvorgang durchführbar ist. Unterscheiden sich Aufladungsvorgang und Ladungsvorgang nicht nur in ihrem Vorzeichen, dann deutet eine solche Werteänderung auf ein Leck. Ein solches Leck verändert die dielektrischen Eigenschaften zwischen den gegenüberstehenden Kontaktflächen, was sich eben auf den Entladungsvorgang auswirkt. Bei dem entsprechenden Verfahren wird somit quasistatisch eine Quasiimpedanz ermittelt. Das Verfahren ist auch für nichtleitende Kontaktflächen einsetzbar.

Die eingangs genannte Aufgabe wird ferner erfindungsgemäß durch ein Verfahren zur Prüfung einer Elektroden-Membran-Einheit gelöst, bei der der zu prüfende Messgegenstand auf einer ersten Elektrodenseite in elektrischen Kontakt gebracht wird mit einer mindestens im Kontaktbereich elektrisch leitenden ersten Kontakteinrichtung und auf einer zweiten Elektrodenseite, welche der ersten Elektrodenseite gegenüberliegt, in elektrischen Kontakt gebracht wird mit einer mindestens im Kontaktbereich elektrisch leitenden zweiten Kontakteinrichtung, wobei die erste und/oder zweite Kontakteinrichtung über beabstandete Kontaktsegmente mit dem Messgegenstand in elektrischen Kontakt gebracht werden, und die elektrische Leitfähigkeit segmentweise ortsaufgelöst gemessen wird, und wobei der Messgegenstand und die Kontakteinrichtungen relativ zueinander linear verschoben werden.

Das erfindungsgemäße Verfahren weist die bereits im Zusammenhang mit der erfindungsgemäßen Vorrichtung erläuterten Vorteile auf.

Weitere vorteilhafte Ausgestaltungen des erfindungsgemäßen Verfahrens wurden bereits im Zusammenhang mit der erfindungsgemäßen Vorrichtung erläutert.

Insbesondere ist es vorgesehen, dass die Impedanz zwischen gegenüberliegenden Kontaktbereichen der ersten Kontakteinrichtung und zweiten Kontakteinrichtung gemessen wird. Dadurch lässt sich auf impedanzspektroskopische Weise die senkrechte Leitfähigkeit insbesondere der Membran (quer zu einer Oberfläche) ermitteln.

Es kann auch vorgesehen sein, dass die Impedanz zwischen bezogen auf eine Abstandsrichtung versetzten Kontaktbereichen der ersten Kontakteinrichtung und zweiten Kontakteinrichtung gemessen wird. Dadurch lässt sich impedanzspektroskopisch auch eine Querkomponente der elektrischen Leitfähigkeit (in einer Oberflächenrichtung) ermitteln, um so die Ortsauflösung zu erhöhen.

Günstigerweise wird der Ort einer Leitfähigkeitsmessung an dem Messgegenstand über Transportparameter bestimmt, so dass beispielsweise der Ort einer Leitfähigkeitsabweichung auf dem Messgegenstand ermittelbar ist.

Beispielsweise wird bei Verwendung einer oder mehrerer Transportwalzen der Ort der Leitfähigkeitsmessung über Winkelstellung und Winkelgeschwindigkeit der Transportwalzen ermittelt.

Die eingangs genannte Aufgabe wird ferner gelöst durch ein Verfahren zur Prüfung einer Elektroden-Membran-Einheit oder einer Membran für eine Elektroden-Membran-Einheit, bei dem der Meßgegenstand zwischen eine erste Kontakteinrichtung und eine zweite Kontakteinrichtung gebracht wird, wobei beide Kontakteinrichtungen mit beabstandeten Kontaktsegmenten versehen sind, welche elektrisch aufladbar sind, und jeweils zugeordnete Kontaktsegmente der beiden Kontakteinrichtungen als Kontaktsegmentpaare elektrisch aufgeladen und entladen werden, um dielektrische Eigenschaften des Meßgegenstands zwischen den Kontaktsegmenten eines Kontaktsegmentpaares zu ermitteln.

Auf diese Weise lassen sich auch isolierende Meßgegenstände wie eine Membran ortsaufgelöst segmentenweise überprüfen. Durch Überprüfung auf eine Abweichung zwischen dem Aufladungsverhalten und dem Entladungsverhalten läßt sich beispielsweise eine Leckstelle in einer Membran als Meßgegenstand detektieren. Dies ist auf eine Änderung der dielektrischen Eigenschaften des Meßgegenstands zwischen den beiden Kontakteinrichtungen zurückzuführen. Durch Aufladung der Kontakteinrichtungen, welche insbesondere als Transportwalzen ausgebildet sind, läßt sich damit eine Quasiimpedanz-Messung an dem Meßgegenstand durchführen, ohne daß ein Strom durch diesen fließen muß.

Die nachfolgende Beschreibung einer bevorzugten Ausführungsform dient im Zusammenhang mit der Zeichnung der näheren Erläuterung der Erfindung. Es zeigen:
- Figur 1: eine schematische Darstellung eines Ausführungsbeispiels einer erfindungsgemäßen Vorrichtung zur Prüfung einer Elektroden-Membran-Einheit in Draufsicht;
- Figur 2: eine vergrößerte Darstellung des Bereichs A in Figur 1 und
- Figur 3: eine Schnittansicht längs der Linie 3-3 gemäß Figur 1.

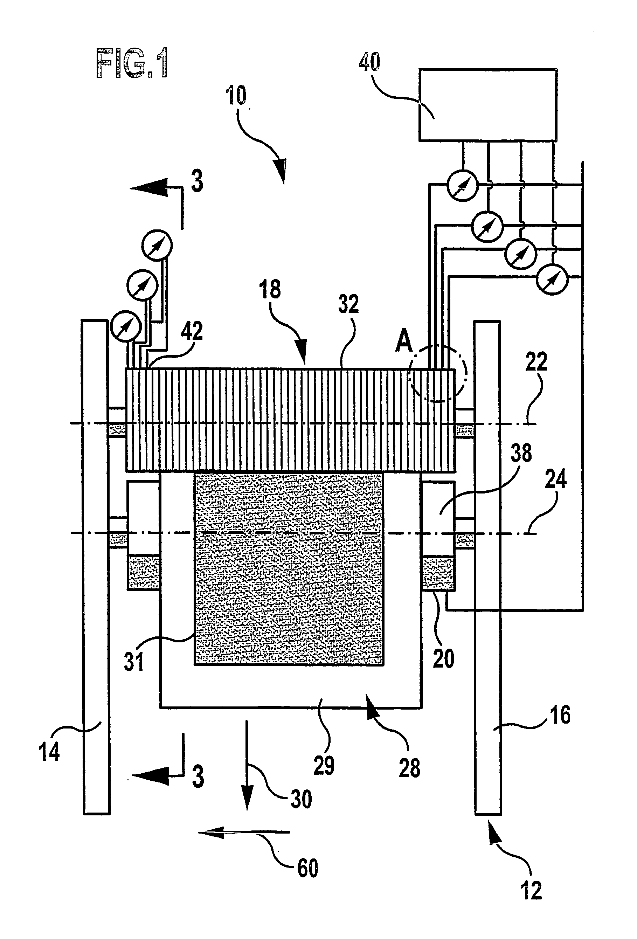

Ein Ausführungsbeispiel einer erfindungsgemäßen Vorrichtung zur Prüfung einer Elektroden-Membran-Einheit, welches in Figur 1 gezeigt und dort als Ganzes mit 10 bezeichnet ist, umfaßt eine Gestellvorrichtung 12 mit gegenüberliegenden Gestellelementen 14 und 16, an welchen eine erste Kontakteinrichtung 18 und eine zweite Kontakteinrichtung 20 drehbar gelagert sind.

Die erste Kontakteinrichtung 18 ist als drehbare Walze und insbesondere Transportwalze ausgebildet, welche in der Gestellvorrichtung 12 gelagert ist. Die zweite Kontakteinrichtung 20 ist ebenfalls als Walze und insbesondere Transportwalze ausgebildet und an der Gestellvorrichtung 12 gelagert, wobei Drehachsen 22 der ersten Kontakteinrichtung 18 und 24 der zweiten Kontakteinrichtung 20 in einer Abstandsrichtung 26 parallel zueinander beabstandet sind.

Zwischen den beiden Kontakteinrichtungen 18 und 20 läßt sich eine zu prüfende Elektroden-Membran-Einheit als Meßgegenstand 28 durchführen, wobei über die Kontakteinrichtungen 18 und 20 dieser Meßgegenstand 28 in einer Transportrichtung 30 transportierbar ist. Die Transportrichtung 30 liegt dabei quer und insbesondere senkrecht zur Abstandsrichtung 26.

Die zu prüfende Elektroden-Membran-Einheit 28 umfaßt eine Membran 29 und an gegenüberliegenden Seiten der Membran 29 angeordnete Elektrodenschichten 31.

Es kann dabei vorgesehen sein, daß der Abstand in der Abstandsrichtung 26 zwischen den Drehachsen 22 und 24 einstellbar ist, um diesen Abstand an die Dicke des durchzuführenden und zu transportierenden Meßgegenstands 28 anzupassen.

Ferner kann es vorgesehen sein, daß ein Abstand der beiden Kontakteinrichtungen 18 und 20 in der Transportrichtung 30 (quer zur Abstandsrichtung 26) einstellbar ist; auf diese Weise läßt sich, wie weiter unten noch näher beschrieben ist, der Abtastbereich auf dem Meßgegenstand 28 in der Transportrichtung 30 einstellen.

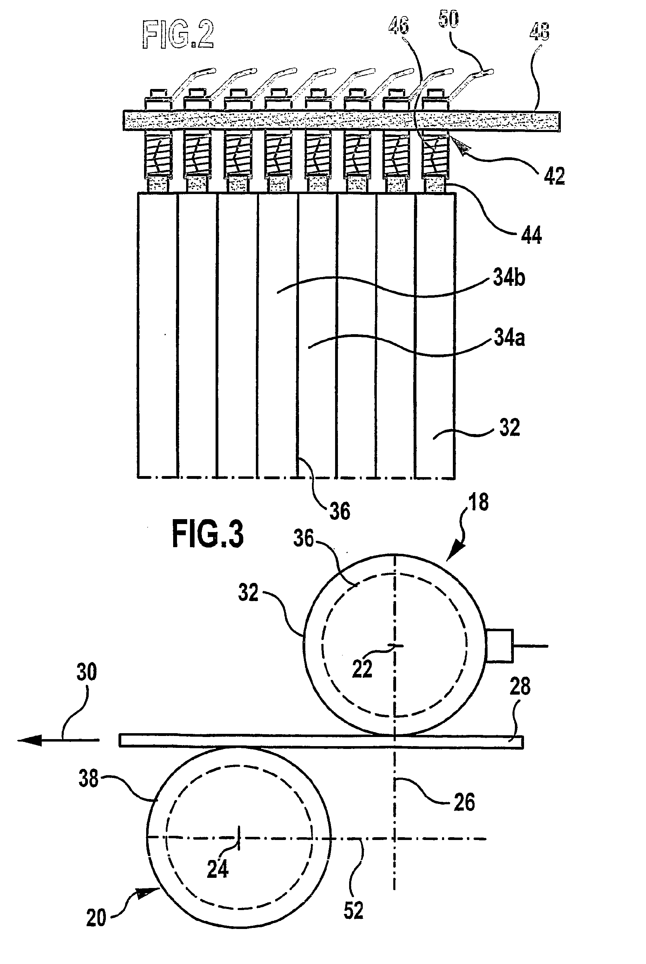

Die erste Kontakteinrichtung 18 umfaßt eine Mehrzahl von Kontaktsegmenten 32, welche parallel beabstandet und insbesondere gleichmäßig zueinander quer zur Transportrichtung 30 angeordnet sind. Ein solches Kontaktsegment 32 ist elektrisch leitend ausgebildet, so daß, wenn dieses den Meßgegenstand 28 kontaktiert, ein elektrischer Kontakt hergestellt ist. Zwischen benachbarten Kontaktsegmenten (beispielsweise den Kontaktsegmenten 34a und 34b in Figur 2) ist ein Bereich 36 gebildet, welcher nicht in Kontakt mit dem Meßgegenstand 28 bringbar ist. Dies läßt sich beispielsweise dadurch erreichen, daß die Kontaktsegmente 32 bezogen auf die Drehachse 22 über den Bereich 36 hinausragen, so daß nur die Kontaktsegmente 32 den Meßgegenstand 28 berühren können, nicht aber die Bereiche 36. Alternativ kann auch vorgesehen sein, daß der Bereich 36 mindestens in seinem dem Meßgegenstand 28 zugewandten Bereich aus einem elektrisch isolierenden Material hergestellt ist.

Bei einer Variante einer Ausführungsform sind die Kontaktsegmente 32 aus elektrisch leitenden Scheiben oder Ringen gebildet, welche in gleichmäßigem Abstand angeordnet sind. Insbesondere weisen die Kontaktsegmente 32 bezogen auf die Achse 22 alle den gleichen Durchmesser auf.

Die erste Kontakteinrichtung 18 ist dabei derart mit Kontaktsegmenten 32 versehen, daß quer zur Transportrichtung 30 der Meßgegenstand 28 in seiner vollen Breite über Kontaktsegmente 32 kontaktierbar ist.

Die zweite Kontakteinrichtung 20 umfaßt ebenfalls leitende Kontaktbereiche. Bei einer ersten Variante einer Ausführungsform ist die zweite Kontakteinrichtung 20 nicht segmentiert ausgebildet, d. h. weist eine auch bezüglich der elektrischen Eigenschaften glatte Oberfläche 38 auf.

Es kann aber auch vorgesehen sein, daß die zweite Kontakteinrichtung 20 auf die gleiche Weise wie die erste Kontakteinrichtung 18 mit Kontaktsegmenten 32 versehen ist (wie in Figur 3 durch durchbrochene Linien angedeutet).

Mittels einer Leitfähigkeitsmeßvorrichtung 40 lassen sich über die erste Kontakteinrichtung 18 und die zweite Kontakteinrichtung 20 Leitfähigkeitsmessungen an dem Meßgegenstand 28 vornehmen, um diesen zerstörungsfrei prüfen zu können. Dazu ist zwischen der zweiten Kontakteinrichtung 20 und der ersten Kontakteinrichtung 18 eine Wechselspannung anlegbar, die typischerweise eine Frequenz in der Größenordnung von 10 kHz aufweist.

An jedem Kontaktsegment 32 ist ein individueller Meßstrom abgreifbar, welcher zwischen der zweiten Kontakteinrichtung 20, dem Meßgegenstand 28 und dem jeweiligen Kontaktsegment 32 der ersten Kontakteinrichtung 18 fließt. Dazu ist jedes Kontaktsegment 32 mit einem individuellen Anschluß 42 zur Verbindung mit der Leitfähigkeits-Meßvorrichtung 40 versehen.

Der Anschluß 42 ist insbesondere durch einen Schleifkontakt gebildet, welcher einen Kohlestift 44 umfaßt, der über eine Feder 46 gegen das zugeordnete Kontaktsegment 32 gedrückt wird, so daß bei jeder Winkelstellung (Drehstellung) der ersten Kontakteinrichtung 18 ein elektrischer Kontakt hergestellt ist.

Die Feder 46 stützt sich dabei an einer stationären Halterung 48 ab, von der dann elektrische Anschlußleitungen 50 zu der Meßvorrichtung 40 geführt sind. Jede Leitung 50 ist individuell einem Kontaktsegment 32 zugeordnet, so daß die Anzahl der Leitungen 50 der Anzahl der Kontaktsegmente 32 entspricht.

Da auf diese Weise der Stromfluß zwischen der zweiten Kontakteinrichtung 20 und den Kontaktsegmenten 32 der ersten Kontakteinrichtung 18 individuell meßbar ist, läßt sich bei vorgegebener, zwischen der ersten Kontakteinrichtung 18 und der zweiten Kontakteinrichtung 20 angelegter Wechselspannung individuell die jedem Kontaktsegment 32 zugeordnete Impedanz bestimmen. Da jedes Kontaktsegment 32 wiederum mit einem bestimmten Bereich des Meßgegenstands 28 in Kontakt steht, läßt sich damit ortsaufgelöst (vorgegeben durch die räumliche Anordnung der Kontaktsegmente 32) die Leitfähigkeit des Meßgegenstandes 28 segmentenweise ortsaufgelöst ermitteln.

Die erfindungsgemäße Vorrichtung funktioniert wie folgt:
Zwischen der ersten Kontakteinrichtung 18 und der zweiten Kontakteinrichtung 20 wird eine Wechselspannung angelegt. Der Meßgegenstand 28 wird zwischen den beiden Kontakteinrichtungen 18 und 20, welche als Transportwalzen ausgebildet sind, in der Transportrichtung 30 transportiert. Die beiden Kontakteinrichtungen 18 und 20 stehen dabei mit jeweiligen gegenüberliegenden Elektrodenseiten des Meßgegenstands 28 in mechanischem und elektrischem Kontakt.

Ist die zweite Kontakteinrichtung 20 mit ihrer Oberfläche 38 glatt ausgebildet, so fließt, wenn der Meßgegenstand 28 gleichmäßig ausgebildet ist, durch jedes Kontaktsegment 32 der gleiche Strom, d. h. die ermittelte Impedanz sollte sich nicht von Kontaktsegment 32 zu Kontaktsegment 32 unterscheiden.

Ist jedoch der Meßgegenstand 28 beispielsweise unterschiedlich dick oder ist die Membran der Elektroden-Membran-Einheit lokal beschädigt, dann ergeben sich Leitfähigkeitsänderungen, die mittels der erfindungsgemäßen Vorrichtung ermittelbar sind. Weist beispielsweise die Membran eine kleine Leckstelle auf, dann sinkt die Leitfähigkeit in diesem Bereich stark ab. Dickenunterschiede führen zu einer unterschiedlichen Protonenleitung in der Membran, wobei diese ortsaufgelöst über die erfindungsgemäße impedanzspektroskopische Leitfähigkeitsmessung ermittelbar sind.

Mittels der erfindungsgemäßen Kontaktsegmente 32 wird die Leitfähigkeit, wenn die Impedanz zwischen der zweiten Kontakteinrichtung 20 und der ersten Kontakteinrichtung 18 gemessen wird und die zweite Kontakteinrichtung 20 nicht segmentenweise ausgebildet ist, in Spuren parallel zur Ausrichtung der Kontaktsegmente 32 gemessen. Sind diese parallel zur Transportrichtung 30 ausgerichtet, dann wird entsprechend der Meßgegenstand 28 in Spuren parallel zur Transportrichtung 30 abgetastet. Die Ortsauflösung quer zur Transportrichtung 30 (Richtung 60 in Figur 1) ist dann durch die Dicke der Kontaktsegmente 32 in der Richtung 60 und die Dicke der Isolierbereiche 36 bestimmt. Eine feinere Auflösung läßt sich durch Verringerung der Dicke der Kontaktsegmente 32 erreichen.

Über den Abstand der beiden Kontakteinrichtungen 18 und 20 in einer Richtung 52 quer zur Abstandsrichtung 26 (parallel zur Transportrichtung 30) läßt sich der abgetastete Bereich bezogen auf die Transportrichtung 30 einstellen, d. h. der Strompfad längs des Meßgegenstands 28 zwischen der ersten Kontakteinrichtung 18 und zweiten Kontakteinrichtung 20 einstellen. Bei einem kurzen Strompfad erhält man eine hohe Ortsauflösung auch in der Transportrichtung 30, während bei längeren Strompfaden (eingestellt über den Abstand in der Richtung 52) ein bezogen auf die Gesamtfläche des Meßgegenstands 28 schneiiere Messung durchführbar ist, Bei kurzem Strompfad und im Grenzfall in Abstandsrichtung 26 gegenüberstehenden Kontakteinrichtungen 18, 20 wird im wesentlichen die senkrechte Leitfähigkeit des Meßgegenstands 28 ermittelt. Bei längeren Strompfaden (d. h. bei endlichem Abstand der Achsen 22, 24 in der Richtung 52) umfaßt die Impedanzmessung auch eine Querkomponente der Leitfähigkeit in der Transportrichtung 30.

Die Impedanz, welche den Kontaktsegmenten 32 zugeordnet ist, wird über die erste Kontakteinrichtung 18 zeitaufgelöst kontinuierlich ermittelt. Zu jedem Zeitpunkt läßt sich der Meßort längs einer Spur feststellen, indem die Winkelstellung der ersten Kontakteinrichtung 18 und die Transportgeschwindigkeit des Meßgegenstands 28 durch die Vorrichtung 10 hindurch ermittelt wird; diese wiederum ist bestimmt durch die Winkelgeschwindigkeiten der beiden Transportwalzen der Kontakteinrichtungen 18 und 20.

Durch die erfindungsgemäße Vorrichtung und durch das erfindungsgemäße Verfahren läßt sich zerstörungsfrei eine Elektroden-Membran-Einheit als Meßgegenstand 28 prüfen. Diese Prüfung kann dabei als Endkontrolle bei der Herstellung erfolgen, um so insbesondere Löcher und Dickenabweichungen in der Membran zu registrieren. Die Prüfung kann auch selber unmittelbar nach der Herstellung von Funktionsschichten wie Elektrodenschichtungen durchgeführt werden, beispielsweise unmittelbar nach Aufsprühen von Elektrodenschichten.

Sind die Drehachsen 22 und 24 der beiden Kontakteinrichtungen 18 und 20 in der Abstandsrichtung 26 genau gegenüberliegend, so wird im wesentlichen die senkrechte Leitfähigkeit der Elektroden-Membran-Einheit gemessen. Sind die Drehachsen in der Richtung 52 versetzt, dann wird auch noch ein Teil der Leitfähigkeit in der Transportrichtung 30 innerhalb einer durch das jeweilige Kontaktsegment zugeordneten Spur gemessen. Durch entsprechende Einstellung dieses Abstands kann dieser Anteil variiert werden.

Es ist aber auch noch möglich, die Leitfähigkeit quer zur Abstandsrichtung 26 und zur Transportrichtung 30 zu ermitteln (in der Richtung 60), indem auch die zweite Kontakteinrichtung 20 segmentiert ist, d. h. mit Kontaktsegmenten 32 mit dazwischenliegenden Isolierbereichen versehen ist. Liegen dabei Kontaktsegmente 32 der ersten Kontakteinrichtung 18 und 20 gegenüber, dann läßt sich wie oben beschrieben eine Messung der Leitfähigkeit in der Abstandsrichtung 26 (gegebenenfalls mit einem Anteil in der Richtung 52) durchführen.

Sind jedoch die entsprechenden zugeordneten Kontaktbereiche 32 auch noch in Richtung der Drehachse 22 (in der Richtung 60) versetzt, dann enthält die gemessene Gesamtimpedanz auch einen Leitfähigkeitsanteil einer elektrischen Leitfähigkeit in Richtung der Drehachse 22, d. h. quer zur den Richtungen 52 und 26 (in Figur 3 senkrecht zur Zeichenebene).

Dieser Anteil ist von demjenigen Leitfähigkeitsanteil in der Abstandsrichtung 26 abtrennbar, wenn beispielsweise der Meßgegenstand 28 durch die wie eben beschrieben ausgebildete erste Kontakteinrichtung 18 und 20 mit jeweiligen versetzten Kontaktsegmenten durchgeführt wird und durch eine erste Kontakteinrichtung 18 und eine zweite Kontakteinrichtung 20 durchgeführt wird, wobei die zweite Kontakteinrichtung 20 eine gleichmäßig elektrisch leitende Oberfläche 38 aufweist. Es läßt sich dann auf diese Weise eine Prüfung mit hoher Genauigkeit durchführen, da die Leitfähigkeit ortsaufgelöst segmentenweise in mindestens zwei Raumrichtungen (26 und 60) ermittelbar ist.

Es kann auch alternativ vorgesehen sein, daß für die erste Kontakteinrichtung 18 zwischen benachbarten Kontaktsegmenten 34a, 34b eine Spannung angelegt wird, so daß ein Strom eingeprägt wird. Dieser Strom fließt dann durch die Elektrodenschicht 31, wobei sich über eine Gleichstromwiderstandsmessung bzw. über eine Impedanzmessung (Bestimmung des Verhältnisses zwischen vorgegebener Spannung und resultierendem Strom) die Leitfähigkeit innerhalb dieser Elektrodenschicht 31 ermitteln läßt. Eine solche Leitfähigkeitsmessung läßt sich im wesentlichen ohne Beeinflussung durch die Membran 29 durchführen. Es läßt sich dann auf diese Weise beispielsweise die Dicke der Elektrodenschicht 31 bestimmen oder es lassen sich Fehler in der Beschichtung detektieren.

Mit der erfindungsgemäßen Vorrichtung ist es auch möglich, isolierende Meßgegenstände wie eine Membran ortsaufgelöst zu messen. Dazu umfaßt die erste und zweite Kontakteinrichtung 18, 20 jeweils Kontaktsegmente 32. Diese werden elektrisch aufgeladen und dann entladen, wobei der Aufladungsvorgang und der Entladungsvorgang beobachtet wird. Tritt beim Entladungsvorgang nicht nur ein Vorzeichenwechsel auf, sondern auch eine Werteänderung, so deutet dies auf ein Leck in der Membran hin. Es werden also die dielektrischen Eigenschaften des Meßgegenstands zwischen den beiden Kontakteinrichtungen 18, 20 ortsaufgelöst segmentenweise detektiert; dazu sind bei der Messung Kontaktsegmente 32 und insbesondere gegenüberliegende Kontaktsegmente 32 der beiden Kontakteinrichtungen 18, 20 einander zugeordnet.

## Patentansprüche

1. Elektroden-Membran-Einheit-Prüfvorrichtung zur Prüfung einer Elektroden-Membran-Einheit (28), umfassend eine erste Kontakteinrichtung (18), um eine erste Elektrodenseite des Messgegenstands (28) in elektrischen Kontakt zu bringen, eine zweite Kontakteinrichtung (20), um eine zweite Elektrodenseite des Messgegenstands (28), welche der ersten Elektrodenseite gegenüberliegt, in elektrischen Kontakt zu bringen, wobei erste (18) und zweite (20) Kontakteinrichtung mindestens im Kontaktbereich elektrisch leitend ausgebildet sind und die erste Kontakteinrichtung (18) und/oder die zweite Kontakteinrichtung (20) eine Mehrzahl von elektrisch leitenden beabstandeten Kontaktsegmenten (32) aufweist, und eine Leitfähigkeits-Messvorrichtung (40), mittels der die Leitfähigkeit des Messgegenstands (28) segmentweise ortsaufgelöst messbar ist, wobei der Messgegenstand (28) und die Kontakteinrichtungen (18, 20) relativ zueinander linear verschieblich sind.

2. Vorrichtung nach Anspruch 1, **dadurch gekennzeichnet, dass** der Messgegenstand (28) zwischen der ersten (18) und der zweiten (20) Kontakteinrichtung durchführbar ist.

3. Vorrichtung nach einem der vorangehenden Ansprüche, **dadurch gekennzeichnet, dass** die erste (18) und/oder zweite (20) Kontakteinrichtung als Transporteinrichtung zum Transport des Messgegenstands (28) relativ zu den Kontakteinrichtungen (18, 20) ausgebildet sind.

4. Vorrichtung nach Anspruch 3, **dadurch gekennzeichnet, dass** die erste und zweite Kontakteinrichtung (18, 20) so ausgebildet sind, dass bei der Transportbewegung des Messgegenstands (28) der elektrische Kontakt erhalten bleibt.

5. Vorrichtung nach einem der vorangehenden Ansprüche, **dadurch gekennzeichnet, dass** die erste Kontakteinrichtung (18) eine Walze umfasst.

6. Vorrichtung nach einem der vorangehenden Ansprüche, **dadurch gekennzeichnet, dass** die zweite Kontakteinrichtung (20) eine Walze umfasst.

7. Vorrichtung nach einem der vorangehenden Ansprüche, **dadurch gekennzeichnet, dass** zwischen benachbarten Kontaktsegmenten (34a, 34b) der ersten (18) und/oder zweiten Kontakteinrichtung (20), welche in elektrischen Kontakt mit dem Messgegenstand (28) bringbar sind, Bereiche (36) liegen, welche nicht in elektrischen Kontakt mit dem Messgegenstand (28) stehen, wenn die Kontaktsegmente (34a, 34b) in Kontakt stehen.

8. Vorrichtung nach einem der vorangehenden Ansprüche, **dadurch gekennzeichnet, dass** die Kontaktsegmente (32) der ersten (18) und/oder zweiten (20) Kontakteinrichtung parallel beabstandet sind.

9. Vorrichtung nach einem der vorangehenden Ansprüche, **dadurch gekennzeichnet, dass** die Kontaktsegmente (32) der ersten (18) und/oder zweiten (20) Kontakteinrichtung gleichmäßig beabstandet sind.

10. Vorrichtung nach einem der vorangehenden Ansprüche, **dadurch gekennzeichnet, dass** ein Kontaktsegment (32) als Scheibe oder Ring ausgebildet ist.

11. Vorrichtung nach einem der vorangehenden Ansprüche, **dadurch gekennzeichnet, dass** die Kontaktsegmente (32) parallel oder in einem kleinen Winkel zur Transportrichtung (30) ausgerichtet sind.

12. Vorrichtung nach einem der vorangehenden Ansprüche, **dadurch gekennzeichnet, dass** über die Leitfähigkeits-Messvorrichtung (40) segmentweise die Impedanz zwischen der ersten Kontakteinrichtung (18) und der zweiten Kontakteinrichtung (20) ermittelbar ist.

13. Vorrichtung nach Anspruch 12, **dadurch gekennzeichnet, dass** eine Wechselspannung einer bestimmten Frequenz zwischen der ersten Kontakteinrichtung (18) und der zweiten Kontakteinrichtung (20) vorgebbar ist oder ein Wechselstrom beaufschlagbar ist.

14. Vorrichtung nach einem der vorangehenden Ansprüche, **dadurch gekennzeichnet, dass** über die Leitfähigkeits-Messvorrichtung (40) der Gleichstromwiderstand oder die Impedanz zwischen Kontaktsegmenten (32) einer Kontakteinrichtung (18; 20) messbar ist.

15. Vorrichtung nach einem der Ansprüche 5 bis 14, **dadurch gekennzeichnet, dass** der Abstand zwischen Achsen (22, 24) von Walzen der ersten Kontakteinrichtung (18) und der zweiten Kontakteinrichtung (20) einstellbar ist.

16. Vorrichtung nach einem der vorangehenden Ansprüche, **dadurch gekennzeichnet, dass** die erste (18) und/oder zweite (20) Kontakteinrichtung mit der Leitfähigkeits-Messvorrichtung (40) über Schleifenkontakte (42) verbunden ist.

17. Vorrichtung nach einem der vorangehenden Ansprüche, **dadurch gekennzeichnet, dass** erste (18) und zweite (20) Kontakteinrichtung mit Kontaktsegmenten (32) versehen sind.

18. Vorrichtung nach Anspruch 17, **dadurch gekennzeichnet, dass** die Impedanz zwischen quer zur Transportrichtung (30) beabstandeten Kontaktsegmenten (32) der ersten (18) und zweiten (20) Kontakteinrichtung messbar ist.

19. Vorrichtung nach einem der vorangehenden Ansprüche, **dadurch gekennzeichnet, dass** mittels der Leitfähigkeits-Messvorrichtung (40) eine Umschaltmessung durchführbar ist, bei der zwischen erster Kontakteinrichtung (18) und zweiter Kontakteinrichtung (20) ein Aufladungsvorgang und ein Entladungsvorgang durchführbar ist.

20. Verfahren zur Prüfung einer Elektroden-Membran-Einheit, bei der der zu prüfende Messgegenstand auf einer ersten Elektrodenseite in elektrischen Kontakt gebracht wird mit einer mindestens im Kontaktbereich elektrisch leitenden ersten Kontakteinrichtung und auf einer zweiten Elektrodenseite, welche der ersten Elektrodenseite gegenüberliegt, in elektrischen Kontakt gebracht wird mit einer mindestens im Kontaktbereich elektrisch leitenden zweiten Kontakteinrichtung, wobei die erste und/oder zweite Kontakteinrichtung über beabstandete Kontaktsegmente mit dem Messgegenstand in elektrischen Kontakt gebracht werden, und die elektrische Leitfähigkeit segmentweise ortsaufgelöst gemessen wird, und wobei der Messgegenstand und die Kontakteinrichtungen relativ zueinander linear verschoben werden.

21. Verfahren nach Anspruch 20, **dadurch gekennzeichnet, dass** der Messgegenstand mittels der ersten und/oder zweiten Kontakteinrichtung relativ zu diesen transportiert wird.

22. Verfahren nach Anspruch 20 oder 21, **dadurch gekennzeichnet, dass** zwischen der ersten Kontakteinrichtung und der zweiten Kontakteinrichtung eine Wechselspannung angelegt wird oder ein Wechselstrom vorgegeben wird.

23. Verfahren nach Anspruch 22, **dadurch gekennzeichnet, dass** die Impedanz zwischen der ersten Kontskteinrichtung und der zweiten Kontakteinrichtung gemessen wird.

24. Verfahren nach Anspruch 23, **dadurch gekennzeichnet, dass** die Impedanz zwischen bezogen auf die Transportrichtung des Messgegenstands relativ zu den Kontakteinrichtungen gegenüberliegenden Kontaktbereichen der ersten Kontakteinrichtung und der zweiten Kontakteinrichtung gemessen wird.

25. Verfahren nach Anspruch 23, **dadurch gekennzeichnet, dass** die Impedanz zwischen bezogen auf die Transportrichtung des Messgegenstands relativ zu den Kontakteinrichtungen quer versetzten Kontaktbereichen der ersten Kontakteinrichtung und der zweiten Kontakteinrichtung gemessen wird.

26. Verfahren nach Anspruch 20, **dadurch gekennzeichnet, dass** der Gleichstromwiderstand oder die Impedanz zwischen Kontaktsegmenten einer Kontakteinrichtung gemessen wird.

27. Verfahren nach einem der Ansprüche 20 bis 26, **dadurch gekennzeichnet, dass** der Ort einer Leitfähigkeitsmessung an dem Messgegenstand über Transportparameter bestimmt wird.

28. Verfahren nach Anspruch 27, **dadurch gekennzeichnet, dass** bei Verwendung einer oder mehrerer Transportwalzen der Ort der Leitfähigkeitsmessung über Winkelstellung und Winkelgeschwindigkeit der Transportwalze oder Transportwalzen ermittelt wird.

29. Verfahren zur Prüfung einer Elektroden-Membran-Einheit oder einer Membran für eine Elektroden-Membran-Einheit, bei dem der Messgegenstand zwischen eine erste Kontakteinrichtung und eine zweite Kontakteinrichtung gebracht wird, wobei beide Kontakteinrichtungen mit beabstandeten Kontaktsegmenten versehen sind, welche elektrisch aufladbar sind, und jeweils zugeordnete Kontaktsegmente der beiden Kontakteinrichtungen als Kontaktsegmentpaare elektrisch aufgeladen und entladen werden, um dielektrische Eigenschaften des Messgegenstands zwischen den Kontaktsegmenten eines Kontaktsegmentpaares zu ermitteln.

30. Verfahren nach Anspruch 29, **dadurch gekennzeichnet, dass** der Messgegenstand durch die beiden Kontakteinrichtungen hindurchtransportiert wird.

## Claims

1. Membrane electrode assembly testing device for testing a membrane electrode assembly (28), comprising a first contact device (18) for bringing a first electrode side of the test object (28) into electrical contact, a second contact device (20) for bringing a second electrode side, lying opposite the first electrode side, of the test object (28) into electrical contact, the first contact device (18) and the second contact device (20) being electrically conductive at least in the contact area, and the first contact device (18) and/or the second contact device (20) having a plurality of electrically conductive contact segments (32) spaced from one another, and a conductivity measuring device (40) for measuring the conductivity of the test object (28) segment-wise in a location-resolved manner, the test object (28) and the contact devices (18, 20) being linearly displaceable relative to one another.

2. Device in accordance with claim 1, **characterized in that** the test object (28) is transportable between the first contact device (18) and the second contact device (20).

3. Device in accordance with any one of the preceding claims, **characterized in that** the first contact device (18) and/or the second contact device (20) is/are constructed as transport device for transporting the test object (28) relative to the contact devices (18, 20).

4. Device in accordance with claim 3, **characterized in that** the first contact device (18) and the second contact device (20) are constructed in such a way that the electrical contact is maintained during the transportation movement of the test object (28).

5. Device in accordance with any one of the preceding claims, **characterized in that** the first contact device (18) comprises a roller.

6. Device in accordance with any one of the preceding claims, **characterized in that** the second contact device (20) comprises a roller.

7. Device in accordance with any one of the preceding claims, **characterized in that** there lie between neighbouring contact segments (34a, 34b) of the first contact device (18) and/or of the second contact device (20), which are able to be brought into electrical contact with the test object (28), areas (36) which are not in electrical contact with the test object (28) when the contact segments (34a, 34b) are in contact therewith.

8. Device in accordance with any one of the preceding claims, **characterized in that** the contact segments (32) of the first contact device (18) and/or of the second contact device (20) are spaced in parallel from one another.

9. Device in accordance with any one of the preceding claims, **characterized in that** the contact segments (32) of the first contact device (18) and/or of the second contact device (20) are spaced uniformly from one another.

10. Device in accordance with any one of the preceding claims, **characterized in that** a contact segment (32) is in the form of a disc or a ring.

11. Device in accordance with any one of the preceding claims, **characterized in that** the contact segments (32) are aligned in parallel with or at a small angle to the direction of transportation (30).

12. Device in accordance with any one of the preceding claims, **characterized in that** the impedance between the first contact device (18) and the second contact device (20) is determinable segment-wise by means of the conductivity measuring device (40).

13. Device in accordance with claim 12, **characterized in that** an alternating voltage of a certain frequency is able to be preset or an alternating current applied between the first contact device (18) and the second contact device (20).

14. Device in accordance with any one of the preceding claims, **characterized in that** the direct current resistance or the impedance between contact segments (32) of a contact device (18; 20) is measurable by means of the conductivity measuring device (40).

15. Device in accordance with any one of claims 5 to 14, **characterized in that** the spacing between axes (22, 24) of rollers of the first contact device (18) and the second contact device (20) is adjustable.

16. Device in accordance with any one of the preceding claims, **characterized in that** the first contact device (18) and/or the second contact device (20) is/are connected by means of sliding contacts (42) to the conductivity measuring device (40).

17. Device in accordance with any one of the preceding claims, **characterized in that** the first contact device (18) and the second contact device (20) are provided with contact segments (32).

18. Device in accordance with claim 17, **characterized in that** the impedance between contact segments (32), spaced from one another transversely to the direction of transportation (30), of the first contact device (18) and the second contact device (20) is measurable.

19. Device in accordance with any one of the preceding claims, **characterized in that** a switch-over measurement with a charging procedure and a discharging procedure being carried out between a first contact device (18) and a second contact device (20) is performable by means of the conductivity measuring device (40).

20. Method for testing a membrane electrode assembly, wherein the test object is brought on a first electrode side into electrical contact with a first contact device which is electrically conductive at least in the contact area, and is brought on a second electrode side, lying opposite the first electrode side, into electrical contact with a second contact device which is electrically conductive at least in the contact area, wherein the first contact device and/or the second contact device is/are brought into electrical contact with the test object via spaced contact segments, and the electrical conductivity is measured segment-wise in a location-resolved manner, and wherein the test object and the contact devices are linearly displaced relative to one another.

21. Method in accordance with claim 20, **characterized in that** the test object is transported by means of the first contact device and/or the second contact device relative to these.

22. Method in accordance with claim 20 or 21, **characterized in that** an alternating voltage is applied or an alternating current is preset between the first contact device and the second contact device.

23. Method in accordance with claim 22, **characterized in that** the impedance between the first contact device and the second contact device is measured.

24. Method in accordance with claim 23, **characterized in that** the impedance between contact areas of the first contact device and the second contact device, which lie opposite one another relative to the contact devices in relation to the direction of transportation of the test object, is measured.

25. Method in accordance with claim 23, **characterized in that** the impedance between contact areas of the first contact device and the second contact device, which are transversely offset relative to the contact devices in relation to the direction of transportation of the test object, is measured.

26. Method in accordance with claim 20, **characterized in that** the direct current resistance or the impedance between contact segments of a contact device is measured.

27. Method in accordance with any one of claims 20 to 26, **characterized in that** the location of a conductivity measurement on the test object is determined via transportation parameters.

28. Method in accordance with claim 27, **characterized in that** in the event one transport roller or several transport rollers is or are used, the location of the conductivity measurement is determined via angular position and angular velocity of the transport roller or transport rollers.

29. Method for testing a membrane electrode assembly or a membrane for a membrane electrode assembly, wherein the test object is brought between a first contact device and a second contact device, both of the contact devices being provided with contact segments spaced from one another, which are electrically chargeable, and respectively associated contact segments of the two contact devices are electrically charged and discharged as contact segment pairs, in order to determine dielectric characteristics of the test object between the contact segments of a contact segment pair.

30. Method in accordance with claim 29, **characterized in that** the test object is transported through the two contact devices.

## Revendications

1. Dispositif pour tester un ensemble membrane-électrode (28), comprenant un premier dispositif de contact (18) afin d'amener un premier côté d'électrode de l'objet à mesurer (28) en contact électrique, un deuxième dispositif de contact (20) afin d'amener en contact électrique un deuxième côté d'électrode, opposé au premier côté d'électrode, de l'objet à mesurer (28), le premier (18) et le deuxième (20) dispositif de contact étant électriquement conducteurs au moins dans la zone de contact et le premier dispositif de contact (18) et/ou le deuxième dispositif de contact (20) présentant une pluralité de segments de contact (32) électriquement conducteurs distants l'un de l'autre, et un dispositif de mesure de la conductivité (40), au moyen duquel la conductivité de l'objet à mesurer (28) peut être mesurée segment par segment avec une résolution dans l'espace, l'objet à mesurer (28) et les dispositifs de contact (18, 20) étant mobiles linéairement l'un par rapport à l'autre.

2. Dispositif selon la revendication 1, **caractérisé en ce que** l'objet à mesurer (28) peut passer entre le premier (18) et le deuxième (20) dispositif de contact.

3. Dispositif selon l'une quelconque des revendications précédentes, **caractérisé en ce que** le premier (18) et/ou le deuxième (20) dispositif de contact est/sont configurés en dispositif de transport pour le transport de l'objet à mesurer (28) par rapport aux dispositifs de contact (18, 20).

4. Dispositif selon la revendication 3, **caractérisé en ce que** le premier et le deuxième dispositif de contact (18, 20) sont configurés de telle manière que le contact électrique est maintenu lors du mouvement de transport de l'objet à mesurer (28).

5. Dispositif selon l'une quelconque des revendications précédentes, **caractérisé en ce que** le premier dispositif de contact (18) comporte un rouleau.

6. Dispositif selon l'une quelconque des revendications précédentes, **caractérisé en ce que** le deuxième dispositif de contact (20) comprend un rouleau.

7. Dispositif selon l'une quelconque des revendications précédentes, **caractérisé en ce que** entre des segments de contact voisins (34a, 34b) du premier (18) et/ou du deuxième (20) dispositif de contact, lesquels peuvent être mis en contact électrique avec l'objet à mesurer (28), il y a des zones (36) qui ne sont pas en contact électrique avec l'objet à mesurer (28) lorsque les segments de contact (37a, 34b) sont en contact.

8. Dispositif selon l'une quelconque des revendications précédentes, **caractérisé en ce que** les segments de contact (32) du premier (18) et/ou du deuxième (20) dispositif de contact sont parallèles.

9. Dispositif selon l'une quelconque des revendications précédentes, **caractérisé en ce que** les segments de contact (32) du premier (18) et/ou du deuxième (20) dispositif de contact sont à une distance constante l'un de l'autre.

10. Dispositif selon l'une quelconque des revendications précédentes, **caractérisé en ce qu'**un segment de contact (32) est en forme de disque ou de bague.

11. Dispositif selon l'une quelconque des revendications précédentes, **caractérisé en ce que** les segments de contact (32) sont parallèles ou forment un angle faible par rapport à la direction de transport (30).

12. Dispositif selon l'une quelconque des revendications précédentes, **caractérisé en ce que** l'impédance entre le premier dispositif de contact (18) et le deuxième dispositif de contact (20) peut être déterminée segment par segment à l'aide du dispositif de mesure de la conductivité (40).

13. Dispositif selon la revendication 12, **caractérisé en ce qu'**il est possible de prédéfinir une tension alternative d'une certaine fréquence entre le premier dispositif de contact (18) et le deuxième dispositif de contact (20) ou d'appliquer un courant alternatif.

14. Dispositif selon l'une quelconque des revendications précédentes, **caractérisé en ce qu'**il est possible de mesurer la résistance en courant continu ou l'impédance entre des segments de contact (32) et un dispositif de contact (18 ; 20) à l'aide du dispositif de mesure de la conductivité (40).

15. Dispositif selon l'une quelconque des revendications 5 à 14, **caractérisé en ce qu'**il est possible de régler la distance entre les axes (22, 24) de rouleaux du premier dispositif de contact (18) et le deuxième dispositif de contact (20).

16. Dispositif selon l'une quelconque des revendications précédentes, **caractérisé en ce que** le premier (18) et/ou le deuxième (20) dispositif de contact est/sont reliés au dispositif de mesure de la conductivité (40) par l'intermédiaire de contacts à boucle (42).

17. Dispositif selon l'une quelconque des revendications précédentes, **caractérisé en ce que** le premier (18) et le deuxième (20) dispositif de contact sont pourvus de segments de contact (32).

18. Dispositif selon la revendication 17, **caractérisé en ce qu'**il est possible de mesurer l'impédance entre les segments de contact (32) distants transversalement au sens de transport (30), du premier (18) et du deuxième (20) dispositif de contact.

19. Dispositif selon l'une quelconque des revendications précédentes, **caractérisé en ce qu'**il possible de procéder, au moyen du dispositif de mesure de la conductivité (40), à une mesure de basculement lors de laquelle une opération de charge et une opération de décharge entre le premier dispositif de contact (18) et le deuxième dispositif de contact (20) sont possibles.

20. Procédé pour tester un ensemble membrane-électrode, dans lequel on amène l'objet à mesurer, qu'il s'agit de tester, en contact électrique sur un premier côté d'électrode avec un premier dispositif de contact électriquement conducteur au moins dans la zone de contact, et en contact électrique sur un deuxième côté d'électrode, opposé au premier côté d'électrode avec un deuxième dispositif de contact électriquement conducteur au moins dans la zone de contact, le premier dispositif de contact et/ou le deuxième dispositif de contact étant mis en contact électrique avec l'objet à mesurer à l'aide de segments de contact distants l'un de l'autre, et la conductivité électrique étant mesurée segment par segment avec une résolution dans l'espace, et l'objet à mesurer et les dispositifs de contact étant mobiles linéairement l'un par rapport l'autre.

21. Procédé selon la revendication 20, **caractérisé en ce que** l'objet à mesurer est transporté, au moyen du premier et/ou du deuxième dispositif de contact, par rapport à ces derniers.

22. Procédé selon la revendication 20 ou la revendication 21, **caractérisé en ce qu'**on applique une tension alternative entre le premier dispositif de contact et le deuxième dispositif de contact ou on prédéfinit un courant alternatif.

23. Procédé selon la revendication 22, **caractérisé en ce qu'**on mesure l'impédance entre le premier dispositif de contact et le deuxième dispositif de contact.

24. Procédé selon la revendication 23, **caractérisé en ce qu'**on mesure l'impédance entre des zones de contact, opposées aux dispositifs de contact par rapport au sens de transport de l'objet à mesurer, du premier dispositif de contact et du deuxième dispositif de contact.

25. Procédé selon la revendication 23, **caractérisé en ce qu'**on mesure l'impédance entre des zones de contact, perpendiculaires aux dispositifs de contact par rapport au sens de transport de l'objet à mesurer, du premier dispositif de contact et du deuxième dispositif de contact.

26. Procédé selon la revendication 20, **caractérisé en ce qu'**on mesure la résistance en courant continu ou l'impédance entre des segments de contact d'un dispositif de contact.

27. Procédé selon l'une quelconque des revendications 20 à 26, **caractérisé en ce qu'**on détermine l'endroit où mesurer la conductivité sur l'objet à mesurer à l'aide de paramètres de transport.

28. Procédé selon la revendication 27, **caractérisé en ce qu'**on détermine l'endroit où mesurer la conductivité à l'aide de la position angulaire et de la vitesse angulaire du rouleau ou des rouleaux de transport lorsqu'on utilise un ou plusieurs rouleaux de transport.

29. Procédé pour tester un ensemble membrane-électrode ou une membrane pour un ensemble électrode-membrane, dans lequel on place l'objet à mesurer entre un premier dispositif de contact et un deuxième dispositif de contact, les deux dispositifs de contact étant pourvus de segments de contact à distance l'un de l'autre, lesquels peuvent être chargés électriquement, et des segments de contact affectés des deux dispositifs de contact pouvant être chargés et déchargés électriquement en tant que paires de segments de contact, afin de déterminer les propriétés diélectriques de l'objet à mesurer entre les segments de contact d'une paire de segments de contact.

30. Procédé selon la revendication 29, **caractérisé en ce que** l'objet à mesurer est transporté à travers les deux dispositifs de contact.
